# EUROPEAN PATENT APPLICATION

(11) **EP 2 450 826 A2**
(43) Date of publication of application: **09.05.2012**
(21) Application number: 11188336.9
(22) Date of filing: 08.11.2011
(51) Int. Cl.: G06K 7/10

(54) **Scanning assembly for laser based bar code scanners**

(30) Priority: 09.11.2010 US 942145
(71) Applicant: Metrologic Instruments, Inc., Blackwood, NJ 08012 (US)
(72) Inventor: Golant, Vladimir, Morristown, NJ 07962-2245 (US)
(74) Representative: Buckley, Guy Julian

(57) **Abstract**

A laser scanning assembly (10) for use in a host system, including a mirror support element (17) and a permanent magnetic element (18) supported on a flexural element (21) made from flexible material being supported by a pair of shaft half sections forming a stationary shaft (22), about which an axis of rotation is formed. The mirror support element and the permanent magnetic element have first and second recesses which accommodate the width of the stationary shaft so that a mirror and permanent magnet subassembly, formed by the mirror support element and the magnetic element, is free to oscillate about the stationary shaft when an electromagnetic coil is driven by a drive circuit and generates magnetic forces that act on the permanent magnetic element.

## Description

### BACKGROUND

### Field of Invention

The disclosure relates to a new and improved laser scanning assembly for use in laser scanning based bar code symbol readers and other optical instruments.

### Brief Description of The State of the Art

A critical element in bar code laser scanners is the laser scanning assembly used to scan a laser beam over bar code symbols on objects to be recognized.

For a wide variety of the hand held laser scanners, this element, often called a flipper, involves the oscillating of a mirror which reflects the laser beam when the laser beam leaves the scanner, and in a retro-reflective design, also when the laser beam returns to the scanner after reflecting/scattering off a scanned object in the scan field.

In general, the performance of a laser a barcode scanner is defined by a number of factors including: the accuracy and performance of its scanning element; the dynamic characteristics of the scanning element; the size and mass of the scanning element; the manufacturability of scanning assembly and energy efficiency of the scanning elements.

To date, numerous laser scanning assembly designs have been proposed in prior US Patents, including Nos. 6,817,529; 5,614,706; 5,923,025; and 5,015,831.

However, most of these scanning assemblies are either too complex or expensive to manufacture, and/or have performance characteristics which are less than ideal for many practical applications.

Thus, there is a great need in the art for a new and improved laser scanning assembly that is simple in design, and capable of scanning laser beams with high performance characteristics, while avoiding the shortcomings and drawbacks of the prior art scanning systems and methodologies.

### OBJECTS AND SUMMARY

A primary object is to provide a new and improved method of and apparatus for scanning a light (e.g. laser) beam across bar code symbols, while avoiding the shortcomings and drawbacks of prior art apparatus.

Another object is to provide an improved apparatus in the form of a laser scanning assembly employing a mirror and permanent magnet subassembly that is supported on a flexural element disposed between a pair of thin shaft half sections that are held against the flexural element by a shaft support bracket, and driven into oscillation by an electromagnetic coil mounted within the support bracket.

Another object is to provide such a laser scanning assembly, wherein shaft half sections having flat surfaces fixedly clamp against the flexural element at its central mid-section and form a stationary shaft which is supported by a U-shaped shaft support bracket, while the mirror and permanent magnet components are mounted on the end portion of the flexural element in a balanced manner, so that the mirror and permanent magnet subassembly are free to oscillate (i.e. dither) about an axis of rotation passing along the stationary shaft.

Another object is to provide such a laser scanning assembly, wherein its electromagnetic coil is also supported by the U-shaped shaft support bracket.

Another object of the present invention is to provide a miniature laser scanning module employing the laser scanning assembly for use a hand-supportable laser scanning bar code reader.

Another object of the present invention is to provide a high-performance, low-cost laser scanning assembly that is easy to manufacture.

These and other objects will become apparent hereinafter.

### BRIEF DESCRIPTION OF THE DRAWINGS

In order to more fully understand the Objects, the following Detailed Description of the Illustrative Embodiments should be read in conjunction with the accompanying figure Drawings, wherein:
Fig. 1 is a perspective view of a hand-supportable laser scanning bar code symbol reader embodying the laser scanning assembly and module;
Fig. 2 is a schematic representation of the laser scanning module employing a first illustrative embodiment of the laser scanning assembly, in combination with a laser beam source, and a beam deflecting mirror;
Fig. 3 is a perspective view of the laser scanning assembly of the first illustrative embodiment showing its mirror and permanent magnet subassembly supported by a flexural element that is disposed between a pair of thin support members, about which an axis of rotation is formed, and the mirror and permanent magnet subassembly oscillates when driven by the electromagnetic coil mounted adjacent to and behind the permanent magnet;
Fig. 4 is an exploded view of the laser scanning element portion of the first illustrative embodiment of the laser scanning assembly, showing the mirror surface supported on the support portion, the flexural member disposed between the pair of shaft half sections (of a support shaft), and the flexural member disposed between the mirror and permanent magnet.
Fig. 5 shows the laser scanning element of the first illustrative embodiment, in its completely assembled configuration;
Fig. 6 is a perspective view of the laser scanning assembly of a second illustrative embodiment, showing its mirror and permanent magnet subassembly supported by a flexural element that is supported between a pair of thin support members, about which an axis of rotation is formed, and the mirror and permanent magnet subassembly oscillates when driven by the electromagnetic coil mounted adjacent to and behind the permanent magnet;
Fig. 7 is an exploded view of the laser scanning element portion of the second illustrative embodiment of the laser scanning assembly, showing the mirror surface supported on the support portion, the flexural member disposed between the pair of shaft half sections (of a support shaft), and the flexural member disposed between the mirror and permanent magnet
Fig. 8 shows the laser scanning element of the second illustrative embodiment, in its completely assembled configuration.

### DETAILED DESCRIPTION OF THE PREFERRED EMBODIMENTS

Referring to the figures in the accompanying Drawings, the various illustrative embodiments of the laser scanning assembly and module will be described in greater detail, wherein like elements will be indicated using like reference numerals.

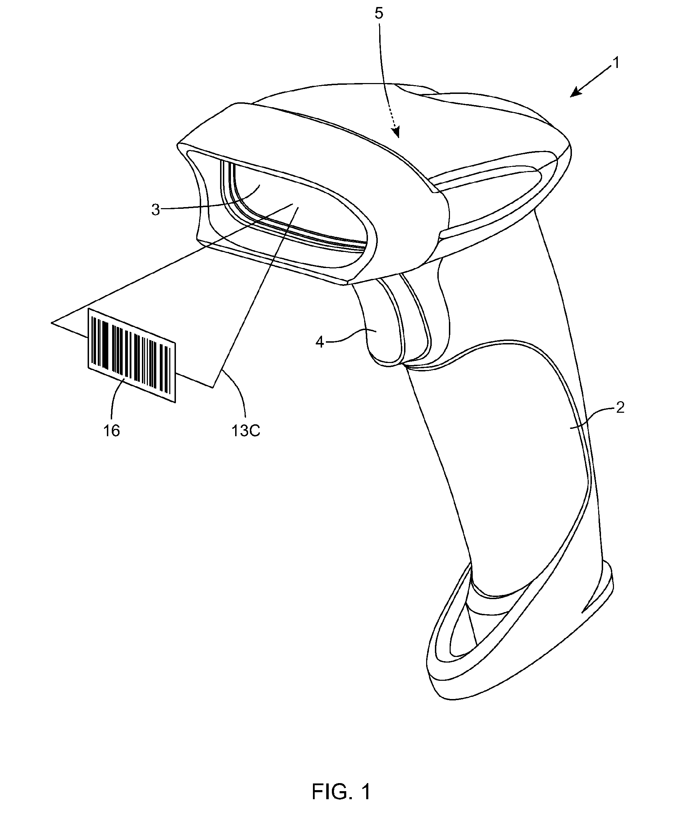

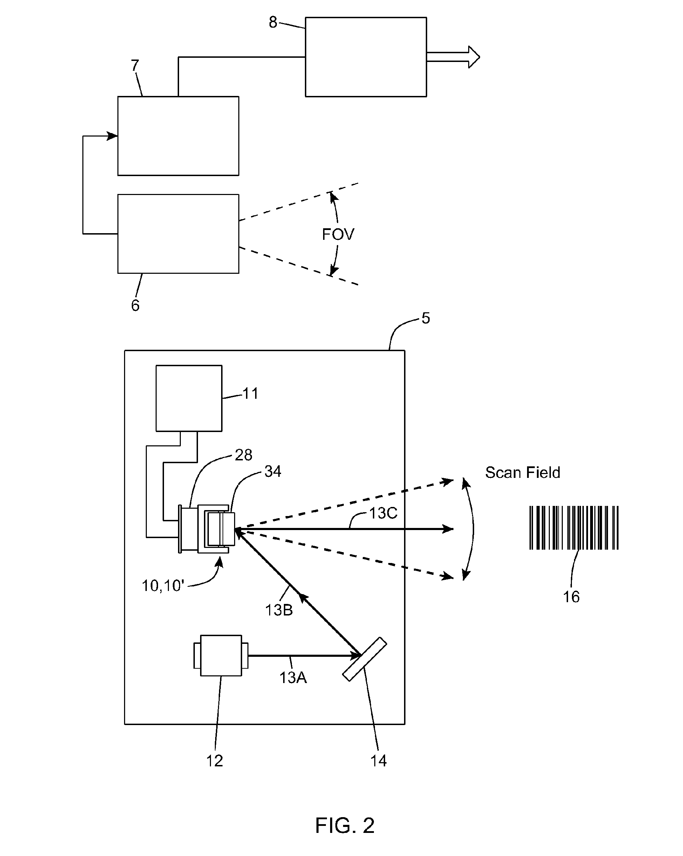

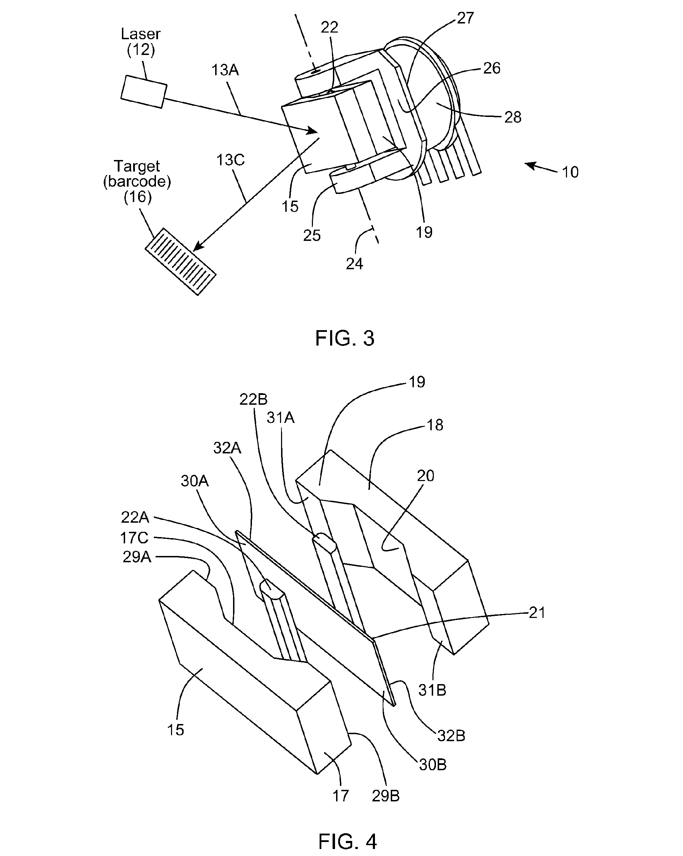

In general, the laser scanning assemblies 10 and 10' illustrated in Figs. 3, 4 and 5, and Figs. 6, 7 and 8, respectively, and the laser scanning module employing the same shown in Fig. 2, can be embodied with virtually any type of host system requiring the scanning of a laser beam for reading bar code symbols and/or other purposes. However, for purposes of illustration only, the laser scanning assemblies and laser scanning module depicted in Fig. 2 are shown as being embodied within the hand-supportable laser scanning bar code symbol reader 1 illustrated in Fig. 1.

As shown in Figs. 1 and 2, the bar code symbol reader 1 comprises: a hand-supportable housing 2; a light transmission window 3 integrated with the housing 2; a manually-actuated trigger switch 4 for activating its laser scanning module 5 with a laser scanning field (scan field); a light collection module 3 having light collection optics with a field of view (FOV) spatially coincident with the scan field; a signal processor/decoder 7 for decode processing analog scan data signals produced by the light collection module 6 and generating symbol character data representative of each bar code symbol read; and an input/output (I/O) communication interface module 7 for interfacing with a host communication system and transmitting symbol character data thereto via wired or wireless communication links that are supported by the symbol reader and host system.

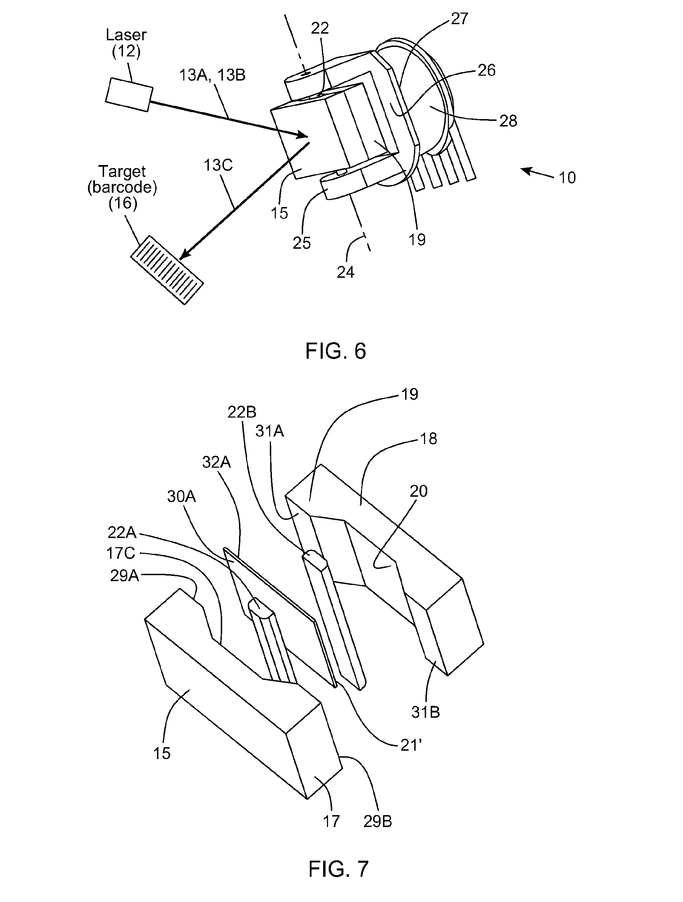

As shown in Fig. 2, the laser scanning module 5 of the illustrative embodiment comprises a number of subcomponents, namely: laser scanning assembly 10 shown in greater detail in Figs. 3, 4 and 5, or the laser scanning assembly 10' shown in greater detail in Figs. 6, 7 and 8; a coil drive circuit 11 for generating an electrical drive signal to drive the electromagnetic coil 28 in the laser scanning assembly 10; and a laser beam source 12 for producing a laser beam 13A; and a beam deflecting mirror 14 for deflecting the laser beam 13A from the laser beam source towards the mirror component 15 of the laser scanning assembly 10, which sweeps the laser beam 13C across its scan field and one or more bar code symbols 16 that might be present in such a scan field during system operation.

As shown in Fig. 3 and 4, the first illustrative embodiment of the laser scanning assembly 10 comprises: a mirror or light reflective surface 15 supported on a mirror support element 17 having a concave recess region 17A; a permanent magnetic element (i.e. magnetized ferromagnetic element) 18 (or a permanent magnet element 18 supported on a support element 19) having a concave recess region 20; a flexural element 21 of resilient characteristics made from a thin piece of flexible material (such as Kapton™, or bronze) having length and width dimensions which are substantially similar to the mirror support element 17 and the magnetic element 18; a pair of thin support members (i.e. shaft half sections of a shaft subassembly) 22A and 22B, each having a flat side that engages the central/middle portion of the flexural element 21, as shown in Figs. 3 through 5, and forms a stationary shaft 22, about which an axis of rotation is formed; and a U-shaped shaft support element 25 for supporting the ends of the stationary shaft 22 and having a base portion 26 that is adapted for mounting on an optical bench, printed circuit (PC) board or other surface where the laser scanning assembly is to be mounted, and a coil support portion 27 for supporting the electromagnetic coil 28 (in the vicinity of the permanent magnet 18) and which is driven by a drive circuit 11 so that it generates magnetic forces on opposite poles of the permanent magnet 18, during scanning assembly operation.

As shown in greater detail in Fig. 4, the mirror support element 15 has first and second end portions 29A and 29B which are fastened to the first and second end portions 30A and 30B of the first side of the flexural element 21. The permanent magnet support element 19 also has first and second end portions 31A and 31B which are fastened to the first and second end portions 32A and 32B of the second side of the flexural element 21, while the recessed portions 18 and 20 accommodate the width of the shaft half sections 22A and 22B, respectively. By way of this arrangement, the mirror and permanent magnet subassembly 34 is free to oscillate (i.e. dither) about the shaft portion, e.g. at least 15 to 20 degrees in each direction (i.e. to oscillate) in a plane generally perpendicular to plane of the flexural element 21, in response to the electromagnetic coil 28 being driven by the drive circuit 11 and generating magnetic forces on opposite (North and South) poles of the permanent magnet 18, in a manner well known in the art.

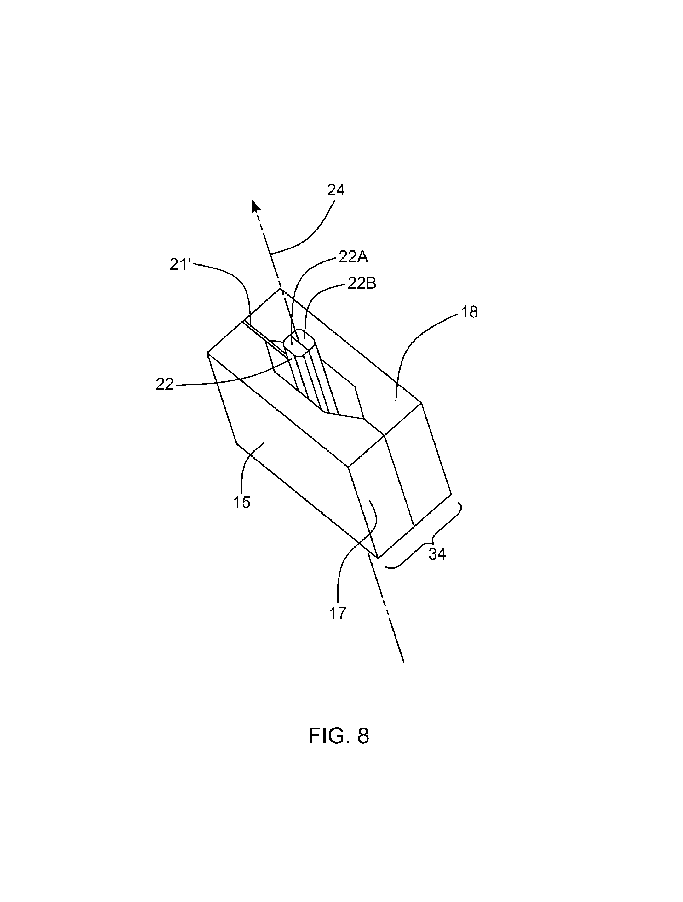

As shown in Fig. 6, the second illustrative embodiment of the laser scanning assembly 10 comprises: a mirror or light reflective surface 15 supported on a support element 17 having a concave recess region 17A; a permanent magnetic element 18 (i.e. magnetized ferromagnetic element) supported on a support element 19, and also having a concave recess region 20; a flexural element 31 of resilient characteristics made from a thin piece of flexible material such as bronze or Kapton^{TM}, having length and width dimensions which are substantially similar to the mirror support element 17 and the permanent magnetic element 18; a pair of thin support members (i.e. shaft half sections of a shaft subassembly) 22A and 22B, each having a flat side that engages the end portion of the flexural element 21', as shown in Figs. 7 and 8, and forms a stationary shaft 22, about which an axis of rotation is formed; and a U-shaped shaft support element 25 for supporting the ends of the stationary shaft 22 and having a base portion 26 that is adapted for mounting on an optical bench, printed circuit (PC) board or other surface where the laser scanning assembly is to be mounted, and a coil support portion 27 for supporting an electromagnetic coil 28 (in the vicinity of the permanent magnet 18) and which is driven by a drive circuit 11 so that it generates magnetic forces on opposite poles of the permanent magnet 18, during scanning assembly operation.

As shown in greater detail in Fig. 7, the mirror support element 15 has first and second end portions 29A and 29B, wherein the first end portion 29A is fastened to the first end portion 30A of the first side of the flexural element 21'. The permanent magnet support element 19 also has first and second end portions 31A and 31B, wherein the first end portion 31A is fastened to the first end portion 32A of the second side of the flexural element 21', while the recessed portions 17A and 20 accommodate the width of the shaft half sections 22A and 22B, respectively. By way of this arrangement, the mirror and permanent magnet subassembly 34 is free to oscillate about the shaft portion, e.g. at least 15 to 20 degrees in each direction (i.e. to oscillate) in plane generally perpendicular to the plane of flexural element 21', in response to the electromagnetic coil 28 being driven by the drive circuit 11 and generating magnetic forces on opposite (North and South) poles of the permanent magnet 18 in a manner well known in the art.

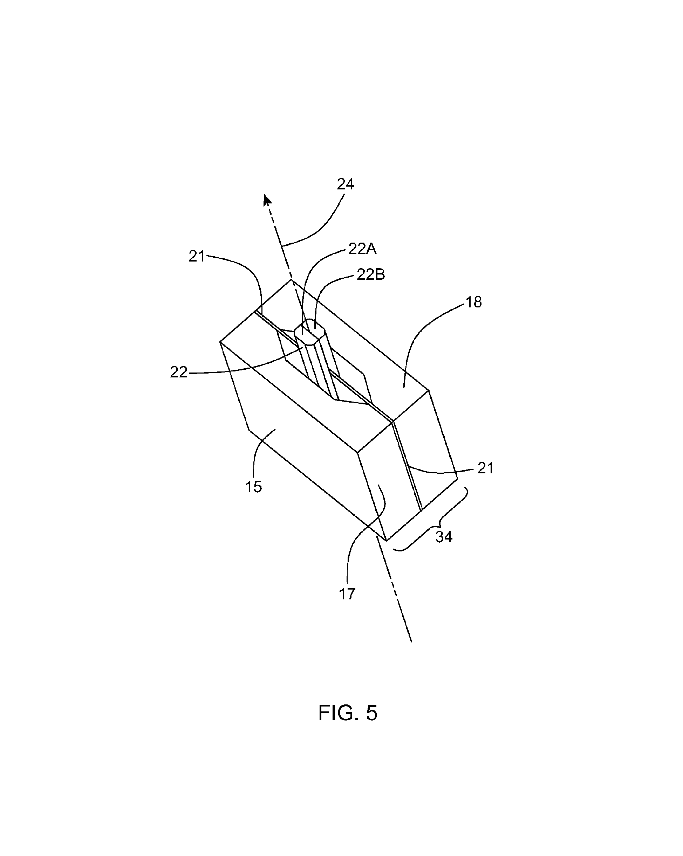

The geometry and thickness of the flexural element 21' and mechanical properties of its material will be selected to achieve the desired natural frequency of oscillation, taking into consideration the mass and inertia of the oscillating components of the scanning element, shown assembled in Figs. 5 and 8, and removed from its U-shaped support structure 25.

Having described the preferred embodiment, several alternative embodiments and modifications readily come to mind.

Alternatively, the mirror support element can be realized as a permanent magnet, with a mirrored surface applied to its planar, non-recessed side, so as to provide a simplified laser scanning element, not having a flexural element located between the mirror and permanent magnet element.

Another alternative embodiment may include differently shaped flexural elements (e.g. S-shape, U-shape, etc).

The flexural element can be made from different kinds of metallic or non-metallic material, (e.g. bronze, steel, Kapton™ plastic material, Mylar™ plastic material, and the like) and/or a combination thereof.

It is also understood that the attachment (i.e. fastening) of the mirror 15 and the permanent magnet 18 to the flexural element 21 can be made by variety of methods, including adhesive, bonding, etc.

It is also understood that it is not mandatory that the surfaces of half shaft holding of the flexural element be flat but may be shaped in a specific way (most likely mirrored symmetrically, e.g. key and notch) to hold portion of flexural element tight when pressed together to form a shaft, and eliminate any slippage of the flexural member due to scanning element oscillation, shock or impact.

In some applications, it might be desirable to configure two or more laser scanning modules in order to generate various types of omni-directional scanning patterns.

Also, the VLD and its associated beam shaping optics associated with the laser beam source may be integrated within the module housing in order to produce a miniature laser scanner capable of producing 1D and 2D scanning patterns under electronic control. Such laser scanners can be integrated within various types of systems using bar code symbols to drive or direct host system operation.

It is understood that the laser scanning element of the illustrative embodiments may be modified in a variety of ways which will become readily apparent to those skilled in the art. All such modifications and variations of the illustrative embodiments thereof shall be deemed to be within the scope of the following Claims appended hereto.

## Claims

1. A laser scanning assembly for use in a host system, comprising:
a mirror support element;
a mirror supported on said mirror support element;
a permanent magnetic element coupled to said mirror support element to form a mirror and permanent magnet subassembly;
a flexural element made from a flexible material;
wherein said permanent magnetic element is supported on said flexural element and being supported by a pair of shaft half sections forming a stationary shaft having a width and an axis of rotation; and
wherein said mirror support element and said permanent magnetic element have first and second recesses which accommodate the width of said stationary shaft so that said mirror and permanent magnet subassembly is free to oscillate about said stationary shaft when an electromagnetic coil is driven by a coil drive circuit and generates magnetic forces that act on said permanent magnetic element.

2. The laser scanning assembly of Claim 1, wherein said light reflective surface comprises a mirror.

3. The laser scanning assembly of Claim 1, wherein said flexural element is made from a metallic or non-metallic material, and/or a combination thereof.

4. The laser scanning assembly of Claim 1, which further comprises: a shaft support structure for supporting said stationary shaft; and a laser beam source for producing a laser beam for scanning across a scan field by said laser scanning assembly when said coil drive circuit drives said electromagnetic coil.

5. The laser scanning assembly of Claim 41 wherein said mirror and permanent magnet subassembly is free to oscillate about said stationary shaft at least 15 to 20 degrees in each direction in a plane generally perpendicular to plane of said flexural element, when said electromagnetic coil is driven by said coil drive circuit.

6. The laser scanning assembly of Claim 4, wherein said host system is a hand-supportable laser scanning based code symbol reader.

7. The laser scanning assembly of Claim 1, wherein said mirror support element has a first surface, and a second surface with said first recess and also first and second end portions;
wherein said mirror is supported on said first surface;
wherein said permanent magnetic element has a first surface, and a second surface with said second recess and also first and second end portions;
wherein said flexural element has a first side with first and second end portions, and a second side with first and second end portions;
wherein each said shaft half section has a flat side engaging a central portion of said flexural element, and forming said stationary shaft, about which said mirror and permanent magnet subassembly is free to oscillate;
wherein the first and second end portions of the second surface of said mirror support element are fastened to the first and second end portions on the first side of said flexural element;
wherein said first and second end portions on the second side of said flexural element are fastened to the first and second end portions of said permanent magnetic element; and
wherein said first and second recesses accommodate the width of said stationary shaft so that said mirror and permanent magnet subassembly are free to oscillate about said stationary shaft when said electromagnetic coil is driven by a coil drive circuit and exerts magnetic forces on said permanent magnetic element.

8. The laser scanning assembly of Claim 7, wherein said light reflective surface comprises a mirror.

9. The laser scanning assembly of Claim 7, wherein said flexural element is made from a metallic or non-metallic material, and/or a combination thereof.

10. The laser scanning assembly of Claim 8, which further comprises: a shaft support structure for supporting said stationary shaft; and a laser beam source for producing a laser beam for scanning across a scan field by said laser scanning assembly when said coil drive circuit drives said electromagnetic coil.

11. The laser scanning assembly of Claim 1, wherein said mirror support element has a first surface, and second surface with a first recess and also first and second end portions;
wherein said mirror is supported on said first surface;
wherein said permanent magnetic element has a first surface, and a second surface with a second recess and also first and second end portions;
wherein said flexural element has a first side with first and second end portions, and a second side with first and second end portions;
wherein each said shaft half section has a flat side engaging said second end portion of said flexural element, and forming said stationary shaft, about which said
wherein said first end portion of the second surface of said mirror support element is fastened to the first end portion of the first side of said flexural element;
wherein said first end portion of the second side of said flexural element is fastened to said first end portion of said permanent magnetic element; and
wherein said first and second recesses accommodate the width of said stationary shaft so that said mirror and permanent magnet subassembly is free to oscillate about said stationary shaft when said electromagnetic coil is driven by said coil drive circuit and exerts magnetic forces on said permanent magnetic element.

12. The laser scanning assembly of Claim 11, wherein said light reflective surface comprises a mirror.

13. The laser scanning assembly of Claim 11, wherein said flexural element is made from a metallic or non-metallic material, and/or a combination thereof.

14. The laser scanning assembly of Claim 11, which further comprises: a shaft support structure for supporting said stationary shaft; and a laser beam source for producing a laser beam for scanning across a scan field by said laser scanning assembly when said coil drive circuit drives said electromagnetic coil.
